# EUROPEAN PATENT APPLICATION

(11) **EP 3 588 866 A1**
(43) Date of publication of application: **01.01.2020**
(21) Application number: 18305792.6
(22) Date of filing: 21.06.2018
(51) Int. Cl.: H04L 12/28, H04L 12/54, H04W 48/18, H04W 88/16, H04L 12/707, H04L 12/741, H04L 12/703

(54) **METHOD AND APPARATUS FOR CONFIGURING A ROUTING TABLE**

(71) Applicant: InterDigital CE Patent Holdings, 75017 Paris (FR)
(72) Inventor: GAUTIER, Eric, 35576 Cesson-Sévigné Cedex (FR); DELAUNAY, Christophe, 35576 Cesson-Sévigné Cedex (FR); HEIJNEN, Henk, 35576 Cesson-Sévigné Cedex (FR); MONTALVO, Luis, 35576 Cesson-Sévigné Cedex (FR)
(74) Representative: Huchet, Anne

(57) **Abstract**

According to a first aspect, there is provided method for configuring a routing table of an apparatus connected to a first access network, the method comprising:
- receiving a first default route from the first access network and configuring the routing table with the first default route;
- receiving at least a second default route from a second access network, after having received the first default route, the routing table remaining configured with the first default route as long as the apparatus is connected to the first access network.

According to a second aspect, there is provided an apparatus implementing the disclosed method.

## Description

### 1. TECHNICAL FIELD

The present disclosure relates to the networking domain, particularly to routing tables of networking equipment routing data packets over multiple access networks.

### 2. BACKGROUND ART

In computer networking, the default route is the setting that defines the packet forwarding rule to use when no specific route can be determined for a given destination address. All packets for destinations not defined in the routing table are sent via the default route. The default route generally points to another router which treats the packet in the same way, i.e. if a route matches, the packet is forwarded accordingly, otherwise the packet is forwarded to the default route of that router. If no default route is configured in the routing table, a packet addressed to a network not explicitly listed in the routing table is discarded. The present disclosure has been designed with the foregoing in mind.

### 3. SUMMARY

According to a first aspect, there is provided an apparatus comprising:
- means for receiving a first default route from a first access network;
- means for receiving at least a second default route from a second access network;
- means for configuring a routing table with the received first default route, the second default route being received after the first default route, the routing table remaining configured with the first default route as long as the apparatus is connected to the first access network.

According to a second aspect, there is provided a method for configuring a routing table of an apparatus connected to a first access network, the method comprising:
- receiving a first default route from the first access network and configuring the routing table with the first default route;
- receiving at least a second default route from a second access network, after having received the first default route, the routing table remaining configured with the first default route as long as the apparatus is connected to the first access network.

### 4. BRIEF DESCRIPTION OF THE DRAWINGS

- **Figure 1** illustrates a system overview involving an apparatus according to a specific and non-limiting embodiment of the disclosed principles;
- **Figure 2** depicts an example of a method for configuring a routing table of an apparatus according to a specific and non-limiting embodiment of the disclosed principles;
- **Figure 3** illustrates a processing device for configuring a routing table according to a specific and non-limiting embodiment of the disclosed principles;
- **Figure 4** represents an exemplary architecture of the processing device of figure 3 according to a specific and non-limiting embodiment of the disclosed principles.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the term " interconnected " is defined to mean directly connected to or indirectly connected with through one or more intermediate components. Such intermediate components may include both hardware and software based components. The term "interconnected" is not limited to a wired interconnection and also includes wireless interconnection.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to a networking device routing data packets over various network interfaces. Data packets represent any set of data being transmitted from a source device to a destination device using any networking protocol. For the sake of clarity and without loss of generality, the present principles will be described with the Internet Protocol (IP) as a networking protocol, but the disclosed principles are applicable to any other kind of protocol adapted to route data packets from a source device to a destination device by transiting over various networking devices.

In computer networking, a routing table is a data table stored in a router or a networking device that lists the routes to a particular destination. Whenever a node needs to send a data packet to another node on a network, it must know where to send it. If the node cannot directly connect to the destination node, it has to send it via other nodes along a proper route to the destination node. In the routing table of a networking device with multiple network interfaces, a route to a given destination specifies to which network interface of the networking device a data packet has to be sent to reach that given destination.

The default route defines the packet forwarding rule to use when there is no route listed in the routing table for a given destination address. In the context of residential gateways providing Internet access to connected devices, the default route generally points to the first internet service provider router in the path to Internet. The default route belongs to the configuration parameters of the residential gateway. Frequently, the residential gateway obtains the default route together with the IP address via a configuration protocol such as for example and without limitation the Dynamic Host Control Protocol (DHCP). If the gateway comprises several wide area network (WAN) interfaces for connecting to Internet via several WANs, the default route needs to be directed to one of the WAN interfaces.

For the sake of clarity and without loss of generality, the present principles will be described with a gateway as a networking device, interconnecting a local area network (LAN) to the Internet via two access networks, but the present principles are applicable to any kind of networking device interconnecting a first network with a second network via at least two different access networks of any types. Furthermore, the present principles will be described interchangeably with wide area networks (WANs) and access networks which have a similar function of interconnecting the gateway to a further network.

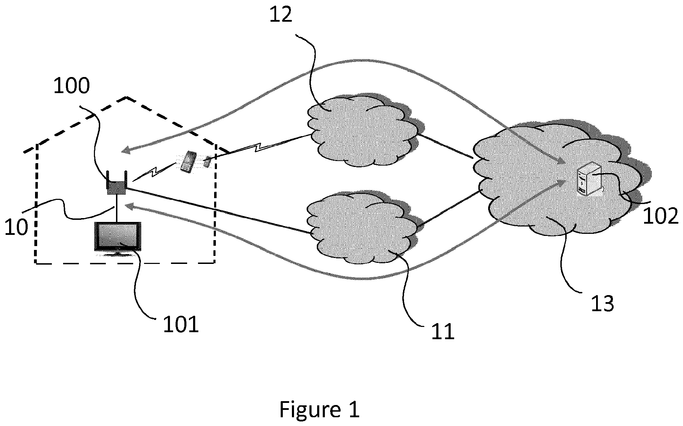

**Figure 1** illustrates a system overview involving a gateway 100 according to a specific and non-limiting embodiment of the disclosed principles. In the illustrated non-limiting example, the gateway 100 provides Internet access to a device 101 via a first access network 11 and a second access network 12. Both the first 11 and the second 12 access networks allow the gateway 100 to access Internet 13 at the same time. The gateway 100 allows the device 101 to exchange data packets with a server device 102 connected to Internet 13, via both the first 11 and the second 12 access networks. In the illustrated non-limiting example, the device 101 is connected to the gateway 100 via a local network 10. The disclosed principles are not limited to the illustrated example and are applicable to any networking device routing data packets received from a first device via a first network towards a second device connected to a second network, the networking device interconnecting the first network with the second network via at least two different access networks, the networking device being configured to route data packets between the first device and the second device over both the first and the second access networks at the same time.

According to the illustrated example, the gateway 100 comprises a local network interface for connection to the local area network 10. The gateway further comprises a first and a second WAN interfaces for connection to respectively the first 11 and the second 12 WANs. The first WAN 11 is for example a xDSL access network, and the second WAN 12 is a cellular wireless access network such as for example and without limitation a third generation (3G) broadband cellular network or a fourth generation (4G) broadband cellular network also known as LTE (Long Term Evolution) network.

Connecting the gateway 100 to Internet 13 via several WAN interfaces at the same time allows to improve the networking performances of the gateway 100 by aggregating the network resources of both WANs. Without limitation, the network resources can be aggregated by using a multi path transport protocol over IP, such as for example and without limitation the SCTP protocol or the MPTCP protocol. Such protocols define their own routing strategies for sending and receiving data packets over multiple concurrent paths of the network. For example, a multi-path transport protocol instance manipulates transport sessions and determines which packets of a session are transmitted over which WAN interface. The routing table of the gateway 100 is configured according to the strategies of the multipath transport protocol so that packets for which a routing strategy has been defined are transmitted to the appropriate WAN interface. Packets for which no route is configured in the routing table, are routed according to the default route (i.e. they are transmitted on the WAN interface corresponding to the default route). There is however a single default route directed to either the first 11 or the second 12 WAN. In case the WAN corresponding to the current default route is not operational, all the data packets for which no route is configured in the routing table cannot be routed to the other WAN interface even if the other access network is operational. This may happen in different situations.

In a first example, the default route is statically configured to a preferred access network, for example the xDSL access network 11, which is experiencing a service disruption. Despite the gateway 100 being connected to Internet 13 via the cellular access network 12, the gateway 100 is not fully operational, because all the data packets corresponding to the default route, which may represent a significant part of the data traffic, are not routed by the gateway (they are either dropped or sent to a non-operational access network).

In a second example, the default route is dynamically configured, for example via the DHCP protocol, and the default route corresponds to the most recently connected WAN interface. If for example the gateway 100 has been connected to the xDSL access network 11 first and then to the cellular access network 12, the default route corresponds to the cellular access network 12. The connection to the cellular access network 12 may for example be realized by opportunistically connecting a Phone as Modem (PAM) device to the gateway 100 providing a data tethering service. If later the PAM device is disconnected from the gateway 100, the cellular WAN 12 becomes unavailable to the gateway 100, and the default route to the cellular WAN 12 is deleted from the routing table. The default route of the routing table is then set to the ultimate default route which is designated as the zero address 0.0.0.0/0 in the Classless Inter-Domain Routing (CIDR) notation. Since broadcasting is not allowed in the Internet, the packets for which no route is configured in the routing table, are dropped,, despite the gateway 100 being still connected to the xDSL WAN 11.

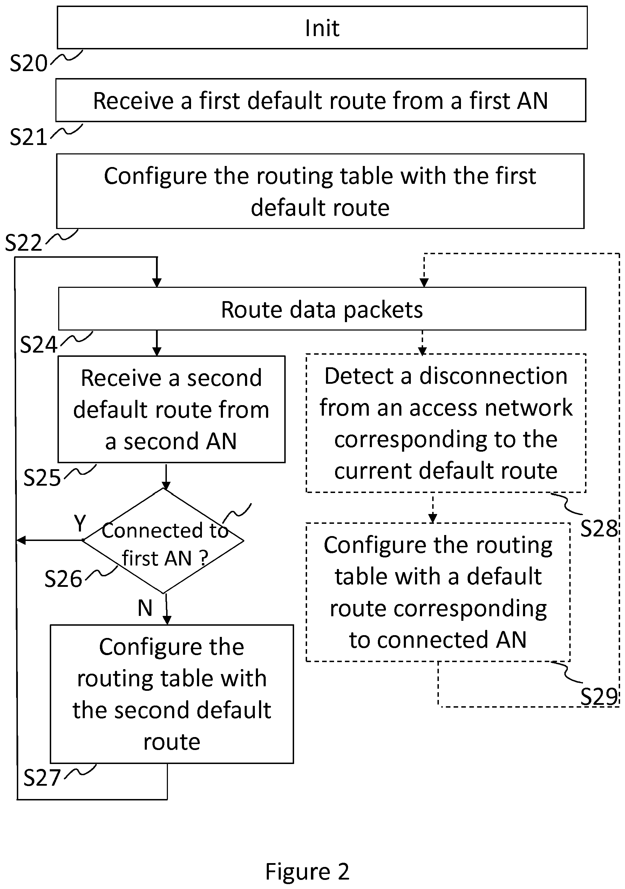

**Figure 2** depicts an example of a method for configuring a routing table of a gateway 100 according to a specific and non-limiting embodiment of the disclosed principles.

In the step S20, the gateway 100 is initialized. The initialization may include for example the initialization of the local area network interface of the gateway 100.

In the step S21, a first default route is received from the first access network 11 according to a configuration protocol of the first access network 11. The reception of the first default route is for example part of the initialisation of the first access network interface of the gateway 100. Without limitation, the first default route is for example received via the DHCP protocol. But depending on the access network architecture, the default route may be received via any other configuration protocol of the first access network 11.

In the step S22, the default route corresponding to the first access network 11 is configured in the routing table of the gateway 100, so that further packets received by the gateway 100 and addressed to networks not explicitly listed in the routing table are forwarded to the first access network interface.

In the step S24, the gateway 100 receives data packets from any of its network interfaces. If the received packet is addressed to a network explicitly listed in the routing table and corresponding to a given network interface of the gateway 100, the received packet is forwarded to that given network interface. If the received packet is addressed to a network not explicitly listed in the routing table, the packet is forwarded to the network interface corresponding to the default route (if configured different from zero). If no non-zero default route is configured, no network interface can be determined for the received packet which is simply dropped.

In the step S25, the gateway 100 receives a second default route from the second access network 12, according to a configuration protocol of the second access network 12. The second default route is received after having received the first default route. The step 25 for example occurs when a user connects a PAM device providing a data tethering service to the gateway for contributing the WAN access network resources of the PAM in addition to the existing and running xDSL access.

In the step S26 the gateway 100 checks whether the gateway 100 is still connected to the first access network 11. The gateway 100 for example checks whether the first access network interface is active. In case the first access network 11 is a xDSL network, this may be accomplished by checking the status of the xDSL physical layer to determine whether the xDSL interface of the gateway 100 is synchronized with the xDSL interface of the access node of the first access network 11. In case the first access network 11 is a wireless access network, this may be accomplished by checking the signal to noise ratio of the signal received from the wireless access node. Checking whether the first access network interface is active may also be accomplished by sending a probe data packet (for example an Internet Control Message Protocol (ICMP) packet) to the first access network 11 and waiting for a corresponding response within a given time period. In yet another example, checking whether the first access network interface is active may be accomplished by detecting whether a configuration protocol message indicating a network disconnection has been received from the first access network 11. Any technique for determining whether an access network 11, 12 is operational for detecting whether the gateway 100 is connected via that access network 11, 12 is compatible with the disclosed principles.

If it is determined that the gateway 100 is connected to the first access network 11, the first default route remains configured in the routing table of the gateway 100 as long as the gateway 100 is connected to the first access network 11. The gateway 100 routes in the step S24 any further data packets received from the device 101 and directed to Internet 13 via both the first 11 and the second 12 access networks according to the routing table, keeping the first default route as the configured default route.

If it is determined that the gateway 100 is disconnected from the first access network 11 (because the first network interface is inactive or because no packet is received in response to an ICMP packet sent to the first access network 11), the second default route is configured in the routing table for replacing the first default route and the gateway 100 routes in the step S24 data packets further received from the device 101 and directed to Internet 13 according to the routing table, i.e. by forwarding it to the second access network 12 (being the only remaining connected access network).

As previously described, when the gateway 100 is connected to both the first 11 and the second 12 access networks, the gateway 100 routes data packets received from the local network 13 and directed to Internet 13 via both the first and the second access network interfaces according to the routing table, wherein the default route is configured to either the first or the second access network interface. In an optional step S28, a disconnection of the gateway from the access network 11, 12 corresponding to the currently configured default route of the routing table is detected. The detection of the access network disconnection may be done according to any of the previously described techniques. When such an access network 11, 12 disconnection is detected by the gateway 100, the routing table is automatically reconfigured in the optional step S29 with the default route corresponding to the still connected access network 11, 12. This automatic reconfiguration allows to keep an accurate default route configured in the routing table despite of unexpected access network disconnection or service disruption.

According to a specific and non-limiting embodiment of the disclosed principles, one of either the first 11 or the second 12 access network is a preferred access network, and when the gateway 100 is connected to both the first 11 and the second 12 access networks, the routing table is configured with the default route received from the preferred access network, independently of the order in which the default routes have been received from the first 11 or the second 12 access networks.

Distinctly from the previous embodiment illustrated in Figure 2, the default route received from the preferred access network is configured in the routing table of the gateway 100 even if received after another default route from another access network. This allows to ensure a preferred access network is always used for the default route in case other access networks are connected to the gateway 100.

In a first variant, the preferred access network is pre-configured in the gateway. This corresponds to situations where it is known by configuration that one access network, for example the wired broadband access network, has a better availability than a wireless access network.

In a second variant, the preferred access network is configurable via a user interface, providing the flexibility to a user to select the access network to be used for the default route.

In a third variant, the preferred access network is automatically selected based on a criterion.

In a first example, the preferred access network is selected among a plurality of access networks if a high bandwidth is available on that access network (i.e. the available bandwidth being above a value, the highest available bandwidth, or any combination of both). Any technique for evaluating the available bandwidth and selecting the access network based on the available bandwidth is compatible with the disclosed principles.

In a second example, the preferred access network is selected among a plurality of access networks if a short latency is available on that access network (i.e. the latency being below a value, the shortest latency, or any combination of both). Any technique for evaluating the latency on the access networks and selecting the access network based on the latency is compatible with the disclosed principles.

In a third example, the preferred access network is selected among a plurality of access networks if a high level of data reliability is available on that access network (i.e. the packet error rate being below a value, the lowest packet error rate, or any combination of both). Any technique for evaluating a packet error rate on the access networks and selecting the access network based on the data reliability is compatible with the disclosed principles.

In a fourth example, the preferred access network is selected among a plurality of access network if the network parameters (i.e. bandwidth, latency, ...) of that access network have a low variability (i.e. the network parameters being relatively stable). The stability of the network parameters is for example evaluated by measuring the standard deviation of the network parameters over a given period of time, the lower the standard deviation the higher the stability. Any technique for evaluating the stability of the network parameters of the access networks and for selecting the access network based on the stability is compatible with the disclosed principles.

Said differently, the automatic selection of a preferred access network among a plurality of access networks is function of at least one of an available bandwidth, a network latency, a data reliability and a network stability of the plurality of access networks.

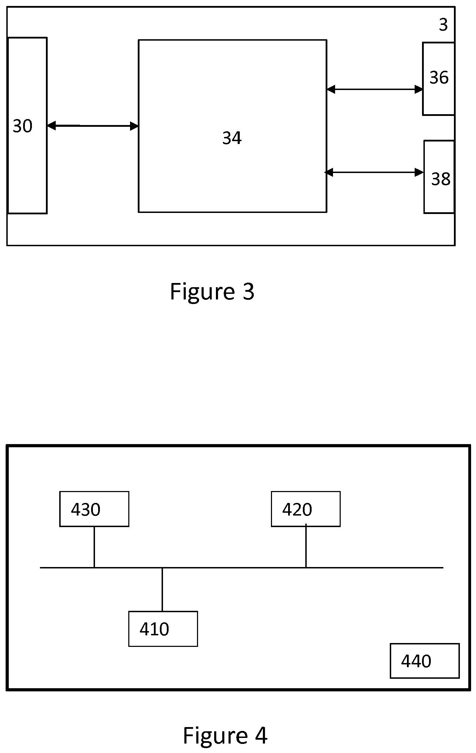

**Figure 3** illustrates a processing device for configuring a routing table according to a specific and non-limiting embodiment of the disclosed principles. The processing device 3 comprises a first 30 a second 36 and a third 38 network interfaces configured to send and receive data packets. According to different embodiments of the disclosed principles, the first network interface 30 is a local network interface belonging to a set comprising:
- a wireless local area network interface such as Bluetooth, Wi-Fi in any flavour, or any kind of wireless interface of the IEEE 802 family of network interfaces;
- a wired LAN interface such as Ethernet, IEEE 802.3 or any wired interface of the IEEE 802 family of network interfaces;
- a wired bus interface such as USB, FireWire, or any kind of wired bus technology.

More generally, any network interface allowing to send and receive data packets are compatible with the disclosed principles.

According to different embodiments of the disclosed principles, the second 36 and the third 38 network interfaces are a first 36 and a second 38 WAN interfaces belonging to a set comprising:
- a broadband cellular wireless network interface such a 2G/3G/4G/5G cellular wireless network interface compliant to the 3GPP specification in any of its releases;
- a wide area network interface such a xDSL, FFTx or a WiMAX interface.

More generally, any network interface allowing to send and receive data packets is compatible with the disclosed principles. The disclosed principles are not limited to processing devices routing data packets between a LAN interface and two WAN interfaces and any processing device routing data packets between at least three network interfaces of any kind is compatible with the disclosed principles.

According to a specific and non-limiting embodiment, the LAN interface 30, the first 36 and the second 38 WAN interfaces are coupled to a processing module 34, configured to receive data packets from the LAN interface 31 and to route the received data packet on both the second 36 and the third 38 WAN interfaces according to a routing table. The processing module 34 is configured to receive a first default route from the first WAN interface 36 and to receive a second default route from the second WAN interface 38.

According to a first specific and non-limiting embodiment, the processing module 34 is configured to configure the routing table of the processing device 3 with the first received default route (the route which is received first from either the first or the second access networks). If the first default route is received first and the second default route is received from the second access network after the first default route is received from the first access network, the processing module 34 configures the routing table with the first default route, the first default route remaining configured in the routing table as long as the processing device 3 is connected to the first access network. Otherwise (if the second default route is received from the second access network before the fist default route is received from the first access network), the processing module 34 configures the routing table with the second default route, the second default route remaining configured in the routing table as long as the processing device 3 is connected to the second access network.

According a second specific and non-limiting embodiment, one of either the first or the second access network is a preferred access network, and when the processing device 3 is connected to both the first and the second access networks, the processing module 34 is configured to configure the routing table with the default route received from the preferred access network.

According to a specific and non-limiting embodiment of the disclosed principles, the second 36 and/or the third 38 network interfaces are removable interfaces, wherein a removable interface comprises a phone as modem (PAM) device connectable to the processing device 3 via for example USB, Bluetooth or Wi-Fi (or more generally any via kind of interface) for providing a data tethering service and allowing the processing device 3 to connect to Internet via the WAN interface of the phone device. The technical advantage of the removable interface is to allow users to contribute to the network resources of the processing device 3 by adding the network resources of their cell phone when they are at home, while for example they are charging the battery of the cell phone. When they leave home and take away their cell phone, the corresponding network interface is removed from the processing device 3 which reconfigures the routing table accordingly to prevent any service disruption. This provides flexibility with regards to the amount of network resources available to the processing device 3 depending on the number of PAM devices currently connected to the processing device 3. The disclosed principles allow the routing table of the processing device 3 to remain configured to an operational access network independently from any connection and disconnection of any removable interface.

**Figure 4** represents an exemplary architecture of the processing device 3 according to a specific and non-limiting embodiment of the disclosed principles. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send output information and/or to allow a user to enter commands and/or data (e.g. a keyboard, a mouse, a touchpad, a webcam, a display), and/or to send / receive data over a network interface; and a power source 440 which may be external to the processing device 4A, 4C.

According to an exemplary and non-limiting embodiment, the processing device 3 further comprises a computer program stored in the memory 420. The computer program comprises instructions which, when executed by the processing device 3, in particular by the processor(s) 410, make the processing device 3 carrying out the processing method described with reference to figure 2. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limiting embodiments, the processing device 3 is a device, which belongs to a set comprising:
- an internet gateway;
- a router;
- a cellular base station according to any cellular network standard;
- a wireless access point;
- a laptop computer;
- a desktop computer;
- a server;
- a networking device.

According to a specific and non-limiting embodiment of the disclosed principles, a first apparatus is disclosed. The first apparatus comprises
- means for receiving a first default route from a first access network;
- means for receiving at least a second default route from a second access network;
- means for configuring a routing table with the received first default route, the second default route being received after the first default route, the routing table remaining configured with the first default route in the routing table as long as the first apparatus is connected to the first access network.

According to a variant, the first apparatus further comprises means for configuring the routing table with the second default route when the first apparatus is disconnected from the first access network while being still connected to the second access network.

According to another variant, one of either the first or the second access network is a preferred access network, and when the first apparatus is connected to both the first and the second access networks, the routing table is configured with the default route received from the preferred access network, instead of remaining configured with the first received default route.

According to another variant, the preferred access network is pre-configured in the first apparatus.

According to another variant, the preferred access network is selected as a function of at least one of an available bandwidth, a network latency, a data reliability and a network stability of the first and the second access networks.

According to another variant, the preferred access network is configurable via a user interface.

According to another variant, the first access network is a broadband wired access network and the second access network is a wireless access network to which the first apparatus is configured to connect via a removable interface.

According to another variant, the first and the second access networks are two wireless access networks to which the first apparatus is configured to connect via two removable interfaces.

According to another variant, the first apparatus is configured to route data packets over both the first and the second access networks using a multi-path transport protocol.

According to another variant, the first apparatus is a gateway.

In a second aspect, a second apparatus is also disclosed. The second apparatus comprises
- a first network interface configured to receive a first default route from a first access network;
- a second network interface configured to receive at least a second default route from a second access network;
- a processor configured to configure a routing table with the received first default route, the second default route being received after the first default route, the routing table remaining configured with the first default route as long as the second apparatus is connected to the first access network.

The routing table is for example stored in a memory of the second apparatus.

In a third aspect a method for configuring a routing table of an apparatus connected to a first access network is also disclosed. The method comprises
- receiving a first default route from the first access network and configuring the routing table with the first default route;
- receiving at least a second default route from a second access network, after having received the first default route, the routing table remaining configured with the first default route as long as the apparatus is connected to the first access network.

Any variant described for the first apparatus is applicable to the second apparatus and to the method.

In a fourth aspect, a computer program product for configuring a routing table is also disclosed. The computer program product comprises program code instructions executable by a processor for performing the method implemented in any of its variants.

In a fifth aspect, a non-transitory computer-readable storage medium storing computer-executable program instructions for sending data packets is also disclosed. The computer-readable storage medium comprises instructions of program code executable by at least one processor to perform the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described wired or wireless networking technologies and any other type of wired and/or wireless networking technologies is compatible with the disclosed principles. The present principles are not further limited to the described multi path transport protocols or network resource aggregation techniques and are applicable to any other multi path transport protocols or network resource aggregation techniques. The present principles are not further limited to the removable WAN interfaces and are applicable to any other types of removable WAN interfaces.

Besides, any characteristic, variant or embodiment described for a method is compatible with an apparatus device comprising means for processing the disclosed method, with a device comprising a processor configured to process the disclosed method, with a computer program product comprising program code instructions and with a non-transitory computer-readable storage medium storing program instructions.

## Claims

1. An apparatus comprising:
- means for receiving a first default route from a first access network;
- means for receiving at least a second default route from a second access network;
- means for configuring a routing table with the received first default route, the second default route being received after the first default route, the routing table remaining configured with the first default route as long as the apparatus is connected to the first access network.

2. The apparatus according to claim 1 further comprising means for configuring the routing table with the second default route when the apparatus is disconnected from the first access network while being still connected to the second access network.

3. A method comprising:
- receiving a first default route from a first access network and configuring a routing table of an apparatus connected to the first access network with the first default route;
- receiving at least a second default route from a second access network, after having received the first default route, the routing table remaining configured with the first default route as long as the apparatus is connected to the first access network.

4. The method according to claim 3, further comprising configuring the routing table with the second default route when the apparatus is disconnected from the first access network while being still connected to the second access network.

5. The apparatus according to claim 1 or 2, or the method according to claim 3 or 4, wherein one of either the first or the second access network is a preferred access network, and when the apparatus is connected to both the first and the second access networks, the routing table is configured with the default route received from the preferred access network, instead of remaining configured with the first received default route.

6. The apparatus or the method according to claim 5, wherein the preferred access network is pre-configured in the apparatus.

7. The apparatus or the method according to claim 5, wherein the preferred access network is selected as a function of at least one of an available bandwidth, a network latency, a data reliability and a network stability of the first and the second access networks.

8. The apparatus or the method according to claim 5, wherein the preferred access network is configurable via a user interface.

9. The apparatus according to any of claims 1 or 2 or 4 to 8, or the method according to any of claims 3 to 8, wherein the first access network is a broadband wired access network and the second access network is a wireless access network to which the apparatus is configured to connect via a removable interface.

10. The apparatus according to any of claims 1 or 2 or 4 to 8, or the method according to any of claims 3 to 8, wherein the first and the second access networks are two wireless access networks to which the apparatus is configured to connect via two removable interfaces.

11. The apparatus according to any of claims 1 or 2 or 4 to 10, or the method according to any of claims 3 to 10, wherein the apparatus is routing data packets over both the first and the second access networks using a multi-path transport protocol.

12. The apparatus according to any of claims 1 or 2 or 4 to 11, or the method according to any of claims 3 to 11, wherein the apparatus is a gateway.

13. A computer program product comprising program code instructions executable by a processor for executing the method according to any of claims 3 to 12.
